# EUROPÄISCHE PATENTSCHRIFT

(11) **EP 3 887 162 B1**
(45) Veröffentlichungstag und Bekanntmachung des Hinweises auf die Patenterteilung: **19.10.2022**
(21) Anmeldenummer: 19835239.5
(22) Anmeldetag: 27.11.2019
(51) Int. Cl.: B33Y 70/00, B29C 64/165, C08G 63/12, C08G 69/26, C08G 69/44

(54) **THERMISCH VERNETZBARE ZUSAMMENSETZUNG ZUR VERWENDUNG ALS BINDEMITTEL IM BINDER-JETTING-VERFAHREN**
THERMALLY CROSSLINKABLE COMPOSITION FOR USE AS A BINDER IN A BINDER JETTING PROCESS
COMPOSITION THERMIQUEMENT RÉTICULABLE DESTINÉE À ÊTRE UTILISÉE COMME AGENT DE LIAISON DANS LE PROCÉDÉ DE JET DE LIANT

(30) Priorität: 29.11.2018 DE 102018220611
(43) Veröffentlichungstag der Anmeldung: 06.10.2021
(73) Patentinhaber: Fraunhofer-Gesellschaft zur Förderung der angewandten Forschung e.V., 80686 München (DE)
(72) Erfinder: HEIN, Sebastian Boris, Dr., 28865 Lilienthal (DE); AUMUND-KOPP, Claus, 28307 Bremen (DE)
(74) Vertreter: Maiwald Patent- und Rechtsanwaltsgesellschaft mbH
(86) Internationale Anmeldenummer: PCT/EP2019/082675
(87) Internationale Veröffentlichungsnummer: WO 2020/109358

(56) Entgegenhaltungen:
- WO-A1-2018/227151
- CN-A- 107 936 235
- DE-A1-102016 121 760

## Beschreibung

Die vorliegende Erfindung betrifft eine flüssige Zusammensetzung, die als thermisch aushärtbares Bindemittel im Pulver-Binder-Jetting-Verfahren verwendbar ist.

In der Norm EN ISO/ASTM 52921:2017 werden die additiven Fertigungsverfahren in folgende Kategorien eingeteilt:
- "*Material Extrusion*": Additives Fertigungsverfahren, bei dem das Baumaterial durch eine Düse oder Öffnung selektiv verteilt wird
- "*Vat Photopolymerisation*": Additives Fertigungsverfahren, bei dem in einem Behälter flüssiges Baumaterial durch Photopolymerisation selektiv ausgehärtet wird
- "*Material Jetting*": Additives Fertigungsverfahren, bei dem Tröpfchen des Baumaterials selektiv aufgetragen werden
- "*Binder Jetting*": Additives Fertigungsverfahren, bei dem ein flüssiges Bindemittel selektiv aufgetragen wird, um ein Pulver zu verfestigen
- "*Sheet Lamination*": Additives Fertigungsverfahren, bei dem Schichten eines Materials flächig verbunden werden, um ein Objekt zu formen
- "*Powder Bed Fusion*": Additives Fertigungsverfahren, bei dem durch einen örtlich selektiven Energieeintrag (z.B. durch einen Laserstrahl) definierte Bereiche in einem Pulverbett verschmolzen werden
- "*Directed Energy Deposition*": Additives Fertigungsverfahren, bei dem gebündelte thermische Energie genutzt wird, um Materialien an ihrem Aufbringungsort durch Verschmelzen miteinander zu verbinden

Das Binder-Jetting-Verfahren wird auch als "*3D-Drucken*" bezeichnet (z.B. VDI Richtlinie VDI 3405, Dezember 2014).

Bei dem additiven Fertigungsverfahren des Binder-Jetting wird ein flüssiges

Bindemittel über einen Druckkopf auf ein Pulverbett appliziert. Durch das schichtweise Aufbauen des Pulverbetts und das lokale Eindrucken des Bindemittels an vorgegebenen Stellen entsteht so ein Bauteil, das im Rahmen einer CAD-Datei erstellt wurde. Da es sich um ein Pulverbett-basiertes Verfahren handelt, werden manchmal auch die Begriffe "*Pulver-3D-Druck*" oder "*Pulver-Binder-Jetting*" verwendet. Bei dem Pulver handelt es sich beispielsweise um ein Metall-, Keramik- oder Kunststoffpulver oder um "Sand" (z.B. pulverförmiger Quarzsand). Im Nachgang zum Drucken wird das Bindemittel ausgehärtet, so dass ein handhabbares Grünteil entsteht, in dem die Pulverpartikel in der gewünschten Geometrie durch das Bindemittel zusammengehalten werden. Bei sinterbasierten Prozessen wird das Bindemittel nach der Entfernung überschüssigen Pulvers thermisch entfernt und das Bauteil einem Sinterschritt unterzogen, so dass ein dichtes Bauteil resultiert.

Relevante Eigenschaften eines Bindemittels für die Verwendung im Binder-Jetting-Verfahren sind die Benetzung des Pulverbetts mit dem zu verdruckenden Bindemittel, hohe Standzeiten des Bindemittels im Drucksystem ohne Verstopfung von Düsen des Druckkopfes, präzise Applizierbarkeit des Bindemittels, schnelles Trocknen des Bindemittels sowie schnelles Aushärten bei möglichst geringer Temperatur, kontrollierbare Vernetzungsreaktion nach dem Drucken, gute Adhäsion des Bindemittels an den Pulverpartikeln, hohe Festigkeit des Bauteils im Grünzustand (d.h. des Pulvers mit ausgehärtetem Bindemittel) und die möglichst rückstandsfreie thermische Entfernbarkeit des ausgehärteten Bindemittels vor dem Sintern des pulverbasierten Bauteils.

WO 2018/111885 A1 beschreibt ein Bindemittel für das Binder-Jetting-Verfahren, das einen Polyvinylalkohol und ein Lösungsmittel enthält.

DE 10 2006 038 858 A1 beschreibt ein Binder-Jetting-Verfahren, bei dem ein Bindemittel, das auf Methacrylaten und/oder Styrolen basiert oder ein Polyurethanharz oder Epoxidharz enthält, verwendet wird.

DE 10 2013 018 182 A1 und DE 10 2015 006 363 A1 beschreiben ein Binder-Jetting-Verfahren, bei das Bindemittel ein Novolak- und/oder Resol-System, d.h. ein präpolymeres Phenol-Formaldehyd-Polykondensat enthält.

DE 10 2016 121 760 A1 beschreibt ein Binder-Jetting-Verfahren, bei dem das Bindemittel ein Saccharid, Gummi arabikum, ein Harz, Zelluloseleinen, ein Wachs, Kasein, ein Epoxidharz, ein Polyurethan, ein Polyvinylacetat, Kautschuk, Cellulose, ein Polyacrylat, PVB, PVP, PVA oder Vinylpyrrolidon-Vinylacetat-Copolymer enthält.

CN 107 936 235 A beschreibt einen für den 3D-Druck verwendbaren Polyester, für dessen Herstellung beispielsweise ein mehrwertiger Alkohol wie Pentaerythritol oder ein Anhydrid einer mehrwertigen Carbonsäure (z.B. Trimellitsäureanhydrid) als Monomere eingesetzt werden.

WO 2018/227151 A1 beschreibt eine polymerisierbare Zusammensetzung, die mehrwertige Monomere und ein- oder mehrwertige Kationen enthält.

Eine Aufgabe der vorliegenden Erfindung ist die Bereitstellung einer aushärtbaren Zusammensetzung, die als Bindemittel für das Binder-Jetting-Verfahren geeignet ist und insbesondere hohe Standzeiten im Drucksystem ohne Verstopfung von Düsen des Druckkopfes aufweist, ein schnelles Trocknen sowie schnelles Aushärten bei möglichst geringer Temperatur ermöglicht, nach ihrer Aushärtung zu einem Grünteil hoher Festigkeit (d.h. zu hoher Grünfestigkeit) führt und eine gute thermische Entfernbarkeit aufweist.

Gelöst wird die Aufgabe durch die Verwendung einer flüssigen Zusammensetzung, enthaltend
- ein oder mehrere Monomere für die Herstellung eines Polyesters, eines Polyamids oder eines Polyesteramids, wobei zumindest ein Monomer mindestens trifunktional ist,
- ein Lösungsmittel,
als Bindemittel, das bei seiner Aushärtung zu einem Polyester, Polyamid oder Polyesteramid führt, beim Binder-Jetting-Verfahren.

Ein Monomer ist eine Verbindung, die durch eine Polymerisationsreaktion ein Polymer bilden kann. Die Wiederholeinheiten des Polymers leiten sich somit von dem bzw. den für die Polymerisation verwendeten Monomer bzw. Monomeren ab. Gemäß IUPAC (IUPAC Compendium of Chemical Terminology, Gold Book, Version 2.3.3, 2014, Seite 606: "Functionality of a Monomer") ist die Funktionalität eines Monomers definiert als die Zahl der Bindungen, die das Monomer in dem Polymer eingehen kann. Werden ausschließlich Monomere mit einer Funktionalität F=2 (d.h. bifunktionale Monomere) verwendet, wird ein lineares Polymer erhalten. Werden bei der Polymerisation auch Monomere mit einer Funktionalität F≥3 (d.h. Monomere, die mindestens trifunktional sind) eingesetzt, so entstehen in der Polymerkette Verzweigungspunkte und es wird ein verzweigtes bzw. dreidimensional vernetztes Polymer erhalten.

In der vorliegenden Erfindung enthält die für das Binder-Jetting verwendbare flüssige Zusammensetzung ein oder mehrere Monomere für die Herstellung eines Polyesters, Polyamids oder Polyesteramids (d.h. Monomere, die zu einem Polyester, einem Polyamid oder einem Polyesteramid reagieren können). Wie dem Fachmann bekannt ist, handelt es sich bei einem Polyester um ein Polymer, das über Estergruppen verknüpfte Wiederholeinheiten aufweist und bei einem Polyamid um ein Polymer, das über Amidgruppen verknüpfte Wiederholeinheiten aufweist. Liegen im Polymer sowohl über Estergruppen verknüpfte Wiederholeinheiten als auch über Amidgruppen verknüpfte Wiederholeinheiten vor, handelt es sich um ein Polyesteramid. Bei den in der flüssigen Zusammensetzung vorliegenden Monomeren handelt es sich also um Verbindungen, die unter Bildung von Ester- oder Amidgruppen reagieren können. Solche Monomere sind dem Fachmann bekannt. Die Monomere reagieren in bekannter Weise über eine Polykondensation zu einem Polyester, einem Polyamid oder einem Polyesteramid.

Wie dem Fachmann bekannt ist, kann ein bifunktionales Monomer für die Polyester- oder Polyamidsynthese mit sich selbst oder mit anderen Monomeren unter Ausbildung von höchstens zwei Ester- oder Amidgruppen reagieren, während z.B. ein trifunktionales Monomer in der Lage ist, drei Ester- oder Amidgruppen in der Polymerkette auszubilden.

Da die flüssige Zusammensetzung mindestens ein Monomer mit einer Funktionalität F≥3, also ein Monomer, das mindestens trifunktional ist, enthält, führt die Aushärtung der Zusammensetzung zu einem verzweigten bzw. dreidimensional vernetzten Polyester, Polyamid oder Polyesteramid. Wie nachfolgend noch beschrieben wird, kann die flüssige Zusammensetzung optional auch noch ein oder mehrere bifunktionale Monomere enthalten.

Die mindestens trifunktionalen Monomere und, sofern vorhanden, die bifunktionalen Monomere reagieren in bekannter Weise über eine Polykondensation zu einem Polyester, einem Polyamid oder einem Polyesteramid. Geeignete Reaktionsbedingungen für eine solche Polykondensation sind dem Fachmann bekannt. Die Monomere sind bevorzugt keine Acrylate oder Methacrylate.

Wie nachfolgend noch eingehender dargelegt, wurde in der vorliegenden Erfindung überraschend festgestellt, dass
- die erfindungsgemäße flüssige Zusammensetzung hohe Standzeiten im Drucksystem ohne Verstopfung von Düsen des Druckkopfes ermöglicht,
- ein schnelles Trocknen sowie schnelles Aushärten bei möglichst geringer Temperatur ermöglicht und
- der bzw. das durch die Aushärtung gebildete Polyester bzw. Polyamid oder Polyesteramid einen sehr stabilen Zusammenhalt der Pulverpartikel bewirkt und somit zu einem Grünteil hoher Festigkeit führt und außerdem eine gute thermische Entfernbarkeit aufweist.

Aufgrund dieses Eigenschaftsprofils eignet sich die oben definierte flüssige Zusammensetzung in ausgezeichneter Weise für die Verwendung als Bindemittel in einem Binder-Jetting-Verfahren.

Wie einleitend bereits beschrieben, handelt es sich bei dem Binder-Jetting-Verfahren um ein additives Fertigungsverfahren, bei dem ein flüssiges Bindemittel über einen Druckkopf an definierten Bereichen auf eine Pulverschicht aufgedruckt wird. Durch das schichtweise Aufbauen des Pulverbetts und das lokale Applizieren des Bindemittels an den vorgegebenen Stellen in jeder der aufgebrachten Pulverschicht entsteht schließlich ein definierter Formkörper (d.h. ein Formkörper, der im Rahmen einer CAD-Datei erstellt wurde). Das Binder-Jetting-Verfahren wird auch als "*3D-Drucken*" bezeichnet (z.B. VDI Richtlinie VDI 3405, Dezember 2014). Da es sich um ein Pulverbett-basiertes Verfahren handelt, werden manchmal auch die Begriffe "*Pulver-3D-Druck*" oder "*Pulver-Binder-Jetting*" verwendet.

Durch eine thermische Behandlung ("Aushärten") reagieren die zumindest trifunktionalen Monomere und, sofern vorhanden, die bifunktionalen Monomere zu einem verzweigten bzw. dreidimensional vernetzten Polyester, Polyamid oder Polyesteramid. Wie nachfolgend noch eingehender beschrieben, kann diese thermische Behandlung beispielsweise nach jedem Aufdrucken des flüssigen Binders auf eine zuvor ausgebrachte Pulverschicht oder auch abschließend nach dem Aufbringen und Bedrucken aller für die Herstellung des Formkörpers erforderlichen Pulverschichten erfolgen. Im Sinne einer möglichst effizienten Verfahrensdurchführung ist es bevorzugt, die gesamte Menge an Bindemittel, die auf die Pulverschichten aufgedruckt wurde, erst dann durch eine thermische Behandlung auszuhärten, nachdem alle für die Herstellung des Formkörpers erforderlichen Pulverschichten im Bauraum ausgebracht wurden.

Die Polymerisation der Monomere zu dem Polyester, Polyamid oder Polyesteramid erfolgt in bekannter Weise durch eine Polykondensation.

Nach der Aushärtung und dem Entfernen des ungebundenen Pulvers erhält man einen Formkörper, in dem die Pulverpartikel durch den Polyester, das Polyamid oder das Polyesteramid miteinander verbunden sind. Üblicherweise liegt das Pulver dabei in einem ungesinterten Zustand vor. Ein solcher Formkörper mit dem noch ungesinterten Pulver, das durch den Polyester, das Polyamid oder das Polyesteramid zusammengehalten wird, wird nachfolgend auch als Grünkörper oder Grünling bezeichnet.

Wie oben ausgeführt, enthält die flüssige Bindemittelzusammensetzung mindestens ein Monomer, das zumindest trifunktional ist, also beim Einbau in die Polymerkette des Polyesters, Polyamids oder Polyesteramids mit mindestens drei benachbarten Wiederholungseinheiten über eine Ester- oder eine Amidgruppe verknüpft sein kann. Das zumindest trifunktionale Monomer wird nachfolgend auch als "Vernetzermonomer" bezeichnet.

Geeignete Monomere mit einer Funktionalität F≥3 für die Herstellung verzweigter Polyester, Polyamide oder Polyesteramide sind dem Fachmann bekannt.

Das zumindest trifunktionale Monomer ist beispielsweise eine Verbindung, die mindestens drei funktionelle Gruppen A¹, A² und A³ aufweist, wobei die funktionellen Gruppen A¹, A² und A³ unabhängig voneinander eine Hydroxylgruppe, eine Aminogruppe (insbesondere -NH₂), eine Carbonsäuregruppe (d.h. -C(O)OH) oder ein Salz (z.B. ein Ammoniumsalz NH₄⁺) dieser Carbonsäuregruppe, eine Carbonsäureestergruppe (d.h. -C(O)OR) oder eine Carbonsäurehalogenidgruppe (d.h. -C(O)X, wobei X=Halogenid) sind und die funktionellen Gruppen A¹, A² und A³ gleich oder verschieden sein können, oder wobei zwei der funktionellen Gruppen A¹-A³ zusammen eine Carbonsäureanhydridgruppe oder eine cyclische Ethergruppe (beispielsweise eine Epoxidgruppe) bilden und die dritte funktionelle Gruppe eine der oben angegebenen funktionellen Gruppen (d.h. eine Hydroxylgruppe, eine Aminogruppe, eine Carbonsäuregruppe oder ein Salz dieser Carbonsäuregruppe, eine Carbonsäureestergruppe oder eine Carbonsäurehalogenidgruppe) ist.

Ist eine der funktionellen Gruppen A¹-A³ eine Carbonsäureestergruppe, kann sie z.B. folgende Formel aufweisen:
-C(O)OR, wobei R C₁₋₈-Alkyl (bevorzugter C₁₋₄-Alkyl, noch bevorzugter C₁₋₂-Alkyl) oder Aryl (z.B. eine substituierte oder unsubstituierte Phenylgruppe) ist.

Wenn das Vernetzermonomer tetrafunktional ist, so kann die Verbindung beispielsweise noch eine weitere funktionelle Gruppe A⁴ aufweisen, wobei A⁴ die gleiche Bedeutung hat wie die oben angegebenen funktionellen Gruppen A¹-A³.

Wenn das Vernetzermonomer eine Funktionalitat F=n aufweist, enthält die Verbindung beispielsweise n funktionelle Gruppen A¹-Aⁿ, wobei jede dieser funktionellen Gruppen die gleiche Bedeutung hat wie die oben angegebenen funktionellen Gruppen A¹-A³. Das Vernetzermonomer weist beispielsweise eine Funktionalität F von 3-6, bevorzugter 3-4 auf.

Das zumindest trifunktionale Vernetzermonomer ist beispielsweise ein Polyol, das mindestens 3 Hydroxylgruppen (z.B. 3-6 Hydroxylgruppen) aufweist; eine aromatische Trihydroxyverbindung; ein Polyamin, das mindestens 3 Aminogruppen (z.B. 3-6 Aminogruppen) aufweist; eine Hydroxycarbonsäure, wobei in der Summe die Anzahl der Hydroxygruppen und der Carbonsäuregruppen mindestens 3 (z.B. 3-6, bevorzugter 3-4) beträgt; eine Aminosäure, wobei in der Summe die Anzahl der Aminogruppen und der Carbonsäuregruppen mindestens 3 (z.B. 3-6, bevorzugter 3-4) beträgt; eine Hydroxy-Aminosäure; eine Polycarbonsäure, die mindestens 3 (z.B. 3-6, bevorzugter 3-4) Carbonsäuregruppen enthält oder ein Anhydrid dieser Polycarbonsäure; oder ein Gemisch aus mindestens zwei der vorstehend genannten Verbindungen. Carbonsäuregruppen können auch als Salz vorliegen (z.B. als NH₄⁺-Salz). Eine Aminogruppe ist insbesondere -NH₂.

Das Polyol ist beispielsweise Glycerin; Pentaerythrit; Di(pentarythrit); Trimethylolpropan; Di(trimethylolpropan), das auch als Bis-(2.2-dimethylolbutyl)ether bezeichnet wird; ein Zuckeralkohol (insbesondere ein C₄₋₆-Zuckeralkohol wie Xylit, Threit, Erythrit, Mannit oder Sorbit); ein cyclisches Polyol wie Innosit; ein Zucker (insbesondere ein C₅₋₆-Zucker, d.h. eine Pentose oder Hexose); ein verzweigtes Polyetherpolyol; oder ein Gemisch aus mindestens zwei dieser Verbindungen.

Bevorzugt ist das Polyol Glycerin oder Pentaerythrit oder ein Gemisch dieser beiden Polyole.

Die aromatische Trihydroxyverbindung ist beispielsweise ein Trihydroxybenzol.

Das Polyamin ist beispielsweise ein Dialkylentriamin, ein Trialkylentetramin, ein lineares oder verzweigtes Polyetheramin, ein aromatisches Triamin, oder ein Gemisch aus mindestens zwei der vorstehend genannten Verbindungen.

Das Dialkylentriamin und das Trialkylentetramin weisen beispielsweise die folgende Formel auf:
R²R¹N-(CH₂)ᵤ-(N(R³)-CH₂)ᵥ)ₓ-N(R⁴)-(CH₂)_{w}-NR⁵R⁶
wobei
R¹, R², R³, R⁴, R⁵ und R⁶ unabhängig voneinander Wasserstoff oder C₁₋₄-Alkyl, bevorzugt Wasserstoff, sind,
x 0 oder 1 ist,
u, v und w unabhängig voneinander 2-6 sind.

Bei einem Dialkylentriamin ist x=0, während bei einem Trialkylentetramin x=1 ist.

Das aromatische Triamin ist beispielsweise unsubstituiertes oder substituiertes Melamin.

In der Hydroxycarbonsäure ist die Anzahl der Hydroxygruppen und der Carbonsäuregruppen in Summe beispielsweise 3-4. Beispielhaft können in diesem Zusammenhang Citronensäure, Isocitronensäure, Äpfelsäure, Tartronsäure, Weinsäure, Mevalonsäure, oder ein Gemisch aus mindestens zwei dieser Hydroxycarbonsäuren genannt werden. In einer bevorzugten Ausführungsform ist die Hydroxycarbonsäure Citronensäure oder Äpfelsäure oder ein Gemisch dieser beiden Hydroxycarbonsäuren.

In der Aminocarbonsäure (bzw. Aminosäure) ist die Anzahl der Aminogruppen und der Carbonsäuregruppen in Summe beispielsweise 3-4; eine Hydroxylgruppe liegt jedoch nicht vor. Beispielhaft können in diesem Zusammenhang Asparaginsäure, Glutaminsäure oder Lysin genannt werden.

Die Hydroxyaminosäure enthält neben der Aminogruppe und der Carbonsäuregruppe mindestens eine Hydroxygruppe. Beispielhaft kann in diesem Zusammenhang Serin genannt werden.

Die Polycarbonsäure mit mindestens 3 Carbonsäuregruppen ist beispielsweise Propan-1,2,3-tricarbonsäure; Oxalbernsteinsäure; Aconitsäure; Butan-1,2,3,4-tetracarbonsäure; eine aromatische Tricarbonsäure wie Trimellitsäure, Hemimellitsäure oder Trimesinsäure; oder ein Gemisch aus mindestens zwei dieser Polycarbonsäuren. Optional kann die Polycarbonsäure auch als Anhydrid vorliegen, indem zwei der Carbonsäuregruppen zu einer Carbonsäureanhydridgruppe reagiert haben. Die Polycarbonsäure enthält keine Hydroxyl- und/oder Aminogruppe, ist also keine Hydroxy- oder Aminocarbonsäure.

In einer bevorzugten Ausführungsform enthält die flüssige Bindemittelzusammensetzung als Vernetzermonomere
(a) ein Polyol, das mindestens 3, bevorzugter 3-6 Hydroxygruppen aufweist, und/oder ein Polyamin, das mindestens 3, bevorzugter 3-6 Amingruppen aufweist; und
(b) mindestens eine der folgenden Verbindungen:
   (b1) eine Hydroxycarbonsäure, wobei in der Summe die Anzahl der Hydroxygruppen und der Carbonsäuregruppen mindestens 3, bevorzugter 3-4 beträgt,
   (b2) eine Aminosäure, wobei in der Summe die Anzahl der Aminogruppen und der Carbonsäuregruppen mindestens 3, bevorzugter 3-4 beträgt,
   (b3) eine Hydroxy-Aminosäure,
   (b4) eine Polycarbonsäure, die mindestens 3 (z.B. 3-6, bevorzugter 3-4) Carbonsäuregruppen enthält oder ein Anhydrid dieser Polycarbonsäure.

Hinsichtlich der bevorzugten Polyole, Polyamine, Hydroxycarbonsäuren, Aminosäuren, Hydroxyaminosäuren und Polycarbonsäuren kann auf die obigen Ausführungen verwiesen werden.

Bevorzugt enthält die flüssige Bindemittelzusammensetzung als Vernetzermonomere
(a) ein Polyol, das mindestens 3, bevorzugter 3-6 Hydroxygruppen aufweist, beispielsweise Glycerin oder Erythrit oder ein Gemisch davon;
(b) eine Hydroxycarbonsäure, wobei in der Summe die Anzahl der Hydroxygruppen und der Carbonsäuregruppen mindestens 3, bevorzugter 3-4 beträgt, beispielsweise Citronensäure oder Äpfelsäure oder ein Gemisch dieser beiden Hydroxycarbonsäuren.

In einer weiteren bevorzugten Ausführungsform enthält die flüssige Bindemittelzusammensetzung als Vernetzermonomere
(a) ein Polyol, das mindestens 3, bevorzugter 3-6 Hydroxygruppen aufweist, beispielsweise Glycerin oder Erythrit oder ein Gemisch davon;
(b) eine Polycarbonsäure, die mindestens 3 (z.B. 3-6, bevorzugter 3-4) Carbonsäuregruppen enthält oder ein Anhydrid dieser Polycarbonsäure, z.B. Propan-1,2,3-tricarbonsäure; Oxalbernsteinsäure; Aconitsäure; Butan-1,2,3,4-tetracarbonsäure; eine aromatische Tricarbonsäure wie Trimellitsäure, Hemimellitsäure oder Trimesinsäure; oder ein Gemisch aus mindestens zwei dieser Polycarbonsäuren.

Optional kann die flüssige Zusammensetzung noch ein oder mehrere bifunktionale Monomere enthalten. Geeignete bifunktionale Monomere für die Herstellung eines Polyesters, Polyamids oder Polyesteramids sind dem Fachmann grundsätzlich bekannt.

Beispielsweise ist das bifunktionale Monomer eine Verbindung, die eine funktionelle Gruppe A und eine funktionelle Gruppe B aufweist (nachfolgend auch als bifunktionales AB-Typ-Monomer bezeichnet), wobei
- die funktionelle Gruppe A eine Amingruppe (insbesondere -NH₂) oder eine Hydroxygruppe (d.h. -OH) ist und
- die funktionelle Gruppe B eine Carbonsäuregruppe (d.h. -C(O)OH) oder ein Salz dieser Carbonsäuregruppe (z.B. ein Ammoniumsalz NH₄⁺), eine Carbonsäureestergruppe oder eine Carbonsäurehalogenidgruppe (d.h. -C(O)X, wobei X=Halogenid wie Cl) ist.

Ist die funktionelle Gruppe B eine Carbonsäureestergruppe, kann sie z.B. folgende Formel aufweisen:
-C(O)OR, wobei R C₁₋₈-Alkyl (bevorzugter C₁₋₄-Alkyl, noch bevorzugter C₁₋₂-Alkyl) oder Aryl (z.B. eine substituierte oder unsubstituierte Phenylgruppe) ist.

Ist A eine Hydroxygruppe, so handelt es sich bei dem bifunktionalen Monomer beispielsweise um eine Hydroxycarbonsäure oder ein Salz dieser Carbonsäure (z.B. ein Ammoniumsalz NH₄⁺), einen Hydroxycarbonsäureester oder ein Hydroxy carbonsäurechlorid.

Die Hydroxycarbonsäure weist beispielsweise folgende Formel auf:
HO-C(H)R-(CH₂)ₓ-C(O)OH
wobei
R H, C₁₋₄-Alkyl (bevorzugt Methyl oder Ethyl) oder Phenyl ist;
x 0, 1 oder 2 ist.

Beispielhaft können in diesem Zusammenhang folgende Verbindungen genannt werden: Glycolsäure, Milchsäure, Mandelsäure, β-Hydroxybuttersäure, 4-Hydroxybuttersäure.

Der Hydroxycarbonsäureester weist beispielsweise folgende Formel auf:
HO-C(H)R¹-(CH₂)ₓ-C(O)OR²
wobei
R¹ H, C₁₋₄-Alkyl (bevorzugt Methyl oder Ethyl) oder Phenyl ist;
R² C₁₋₄-Alkyl, bevorzugt Methyl oder Ethyl ist;
x 0, 1 oder 2 ist.

Beispielhaft können in diesem Zusammenhang Milchsäuremethylester und Milchsäureethylester genannt werden.

Das Hydroxycarbonsäurehalogenid weist beispielsweise folgende Formel auf:
HO-C(H)R-(CH₂)ₓ-C(O)X
wobei
R H, C₁₋₄-Alkyl (bevorzugt Methyl oder Ethyl) oder Phenyl ist;
X ein Halogenidatom, beispielsweise Cl ist;
x 0, 1 oder 2 ist.

Ist A eine Aminogruppe (insbesondere -NH₂), so handelt es sich bei dem bifunktionalen Monomer beispielsweise um eine Aminosäure, einen Aminocarbonsäureester oder ein Aminocarbonsäurechlorid. Beispielhaft können in diesem Zusammenhang Glycin, Alanin oder ein C₁₋₄-Alkylester des Glycins (z.B. Glycinethylester) genannt werden.

Gemäß einer weiteren beispielhaften Ausführungsform ist das bifunktionale Monomer eine Verbindung, die eine funktionelle Gruppe A und eine funktionelle Gruppe A' aufweist (nachfolgend auch als bifunktionales AA'-Typ-Monomer bezeichnet), wobei die funktionellen Gruppen A und A' unabhängig voneinander eine Carbonsäuregruppe (d.h. -C(O)OH) oder ein Salz dieser Carbonsäuregruppe (z.B. ein Ammoniumsalz NH₄⁺), eine Carbonsäureestergruppe oder eine Carbonsäurehalogenidgruppe (d.h. -C(O)X, wobei X=Halogenid wie z.B. Cl) sind und die funktionellen Gruppen A und A' gleich oder verschieden sein können, oder wobei die funktionellen Gruppen A und A' zusammen eine Carbonsäureanhydridgruppe bilden.

Ist die funktionelle Gruppe A oder A' eine Carbonsäureestergruppe, kann sie z.B. folgende Formel aufweisen:
-C(O)OR, wobei R C₁₋₈-Alkyl (bevorzugter C₁₋₄-Alkyl, noch bevorzugter C₁₋₂-Alkyl) oder Aryl (z.B. eine substituierte oder unsubstituierte Phenylgruppe) ist.

Für A=A' ist das bifunktionale AA'-Typ-Monomer beispielsweise eine Dicarbonsäure oder ein Salz dieser Dicarbonsäure, ein Dicarbonsäureester oder ein Dicarbonsäurehalogenid. Für A≠A' ist das bifunktionale AA'-Typ-Monomer beispielsweise eine Monocarbonsäure, die als weitere funktionelle Gruppe noch eine Carbonsäureester- oder Carbonsäurehalogenidgruppe aufweist.

Die Dicarbonsäure kann eine gesättigte oder ungesättigte Dicarbonsäure sein.

Die gesättigte Dicarbonsäure weist beispielsweise folgende Formel auf:
HO(O)C-(CH₂)ₓ-COOH
wobei x 0-4, bevorzugter 0-2 ist.

Als beispielhafte gesättigte Dicarbonsäuren können Oxalsäure und Bernsteinsäure genannt werden.

Beispielhafte ungesättigte Dicarbonsäuren sind Maleinsäure, Fumarsäure, Itaconsäure, Citraconsäure und Mesaconsäure. Bevorzugt ist die ungesättigte Dicarbonsäure Maleinsäure.

Wenn die beiden Dicarbonsäuregruppen zu einer Anhydridgruppe reagiert haben, kann das bifunktionale Monomer vom AA'-Typ auch als Anhydrid vorliegen, z.B. Maleinsäureanhydrid.

Gemäß einer weiteren beispielhaften Ausführungsform ist das bifunktionale Monomer eine Verbindung, die eine funktionelle Gruppe B und eine funktionelle Gruppe B' aufweist (nachfolgend auch als bifunktionales BB'-Typ-Monomer bezeichnet), wobei die funktionellen Gruppen B und B' unabhängig voneinander eine Hydroxylgruppe oder Aminogruppe sind und die funktionellen Gruppen B und B' gleich oder verschieden sein können, oder wobei die funktionellen Gruppen B und B' zusammen eine cyclische Ethergruppe (beispielsweise eine Epoxidgruppe) bilden.

In dem bifunktionalen BB'-Typ-Monomer ist bevorzugt B=B'. Für diesen Fall ist das bifunktionale BB'-Typ-Monomer ein Diol oder ein Diamin. Im Rahmen der vorliegenden Erfindung können B und B' aber auch unterschiedlich sein, so dass das bifunktionale Monomer II beispielsweise ein Aminoalkohol (d.h. eine Verbindung, die eine Amino- und eine Hydroxygruppe aufweist) ist.

Das Diol ist beispielsweise ein Alkandiol (z.B. ein C₂₋₆-Alkandiol), ein Polyethylenglycol, ein Polypropylenglycol, oder ein Gemisch aus mindestens zwei dieser Verbindungen.

Das Alkandiol ist beispielsweise ein 1,2-Alkandiol (z.B. Ethylenglycol oder Propylenglycol), ein 1,3-Alkandiol oder ein 1,4-Alkandiol.

Das Polyethylenglycol ist beispielsweise ein Diethylenglycol, ein Triethylenglycol oder ein Tetraethylenglycol. Im Rahmen der vorliegenden Erfindung können aber auch höhere Polyethylenglycole verwendet werden, z.B. solche der folgenden Formel:
HO-CH₂-CH₂-[O-CH₂-CH₂]ₓ-OH
wobei x=4-800.

Das Diamin ist beispielsweise ein Alkandiamin (z.B. ein C₂₋₈-Alkandiamin, bevorzugter ein C₂₋₆-Alkandiamin), wobei dieses linear oder verzweigt sein kann. Das lineare Alkandiamin kann z.B. folgende Formel aufweisen:
H₂N-CH₂-CH₂-(CH₂)ₓ-NH₂
wobei x 0-6, bevorzugter 0-4 ist.

Beispielhaft können in diesem Zusammenhang Ethylendiamin und Hexamethylendiamin genannt werden.

Sofern vorhanden, können die oben beschriebenen bifunktionalen Monomere vom AB-, AA'- und BB'-Typ einzeln oder auch in Kombination miteinander vorliegen, z.B. nur ein oder mehrere Monomere vom AB-Typ oder mindestens ein AA'-Monomer in Kombination mit mindestens einem BB'-Monomer.

In einer beispielhaften Ausführungsform der vorliegenden Erfindung enthält die flüssige Bindemittelzusammensetzung
(a) ein Polyol, das mindestens 3, bevorzugter 3-6 Hydroxygruppen aufweist, beispielsweise Glycerin oder Erythrit oder ein Gemisch davon;
(b) eine Hydroxycarbonsäure, wobei in der Summe die Anzahl der Hydroxygruppen und der Carbonsäuregruppen mindestens 3, bevorzugter 3-4 beträgt, beispielsweise Citronensäure oder Äpfelsäure oder ein Gemisch dieser beiden Hydroxycarbonsäuren;
(c) eine als bifunktionales Monomer fungierende Dicarbonsäure (z.B. eine gesättigte Dicarbonsäure wie Oxalsäure und Bernsteinsäure oder eine ungesättigte Dicarbonsäure wie Maleinsäure) oder ein Anhydrid der Dicarbonsäure oder eine Aminosäure (wie z.B. Glycin oder Alanin).

In einer weiteren beispielhaften Ausführungsform enthält die flüssige Bindemittelzusammensetzung
(a) ein Polyol, das mindestens 3, bevorzugter 3-6 Hydroxygruppen aufweist, beispielsweise Glycerin oder Erythrit oder ein Gemisch davon;
(b) eine Polycarbonsäure, die mindestens 3 (z.B. 3-6, bevorzugter 3-4) Carbonsäuregruppen enthält oder ein Anhydrid dieser Polycarbonsäure, z.B. Propan-1,2,3-tricarbonsäure; Oxalbernsteinsäure; Aconitsäure; Butan-1,2,3,4-tetracarbonsäure; eine aromatische Tricarbonsäure wie Trimellitsäure, Hemimellitsäure oder Trimesinsäure; oder ein Gemisch aus mindestens zwei dieser Polycarbonsäuren;
(c) eine als bifunktionales Monomer fungierende Dicarbonsäure (z.B. eine gesättigte Dicarbonsäure wie Oxalsäure und Bernsteinsäure oder eine ungesättigte Dicarbonsäure wie Maleinsäure) oder ein Anhydrid der Dicarbonsäure oder eine Aminosäure (wie z.B. Glycin oder Alanin).

Die oben beschriebenen mindestens trifunktionalen Monomere und, sofern vorhanden, die bifunktionalen Monomere reagieren in bekannter Weise über eine Polykondensation zu einem Polyester, einem Polyamid oder einem Polyesteramid. Geeignete Reaktionsbedingungen für eine solche Polykondensation sind dem Fachmann bekannt. Beispielsweise erfolgt die Polykondensation durch eine thermische Behandlung der auf das Pulver aufgebrachten flüssigen Zusammensetzung bei einer Temperatur von mindestens 130°C, bevorzugter mindestens 150°C, beispielsweise im Bereich von 130°C bis 230°C, bevorzugter 160°C bis 210°C, besonders bevorzugt 170°C bis 200°C.

Der pH-Wert der flüssigen Zusammensetzung kann über einen breiten Bereich variiert werden. So kann der pH-Wert z.B. sauer, neutral oder basisch sein.

Sofern die flüssige Zusammensetzung noch ein oder mehrere bifunktionale Monomere enthält, kann deren molares Verhältnis zu den mindestens trifunktionalen Monomeren über ein breiten Bereich variiert werden. Beispielsweise beträgt das molare Verhältnis der Gesamtmenge der Monomere, die mindestens trifunktional sind, zu der Gesamtmenge der bifunktionalen Monomeren 1/20 bis 100/1, bevorzugter 1/10 bis 10/1.

Wie oben ausgeführt, enthält die flüssige Zusammensetzung ein oder mehrere Lösungsmittel. Das Lösungsmittel ist beispielsweise Wasser oder ein organisches Lösungsmittel, insbesondere ein polares organisches Lösungsmittel wie ein C₁₋₄-Alkohol (z.B. Ethanol oder Isopropanol) oder Aceton, oder ein Gemisch aus mindestens zwei dieser Lösungsmittel. Sofern Wasser vorliegt, beträgt sein Anteil, bezogen auf das Gesamtvolumen der Lösungsmittel, 4-50 Vol%.

Die Gesamtkonzentration der mindestens trifunktionalen Monomere und der optionalen bifunktionalen Monomere in der flüssigen Zusammensetzung kann über einen relativ breiten Bereich variiert werden. Beispielsweise liegt die Gesamtkonzentration der Monomere in der flüssigen Zusammensetzung im Bereich von 10 Gew% bis 50 Gew%, bevorzugter 15 Gew% bis 35 Gew%.

Optional kann die flüssige Zusammensetzung weitere Additive enthalten. Beispielhaft können in diesem Zusammenhang Benetzungshilfsmittel, Mikrobiozide, Fließhilfsmittel, Entschäumer, Plastifizierungsmittel, Korrosionsschutzmittel und chemische oder rheologische Stabilisatoren genannt werden.

Die Erfindung betrifft außerdem ein Verfahren zur Herstellung eines Formkörpers durch Binder-Jetting, wobei
(i) eine Pulverschicht auf eine Bauplatte oder einer zuvor aufgebrachten Pulverschicht aufgebracht wird,
(ii) definierte Bereiche der in Schritt (i) aufgebrachten Pulverschicht mit der oben beschriebenen flüssigen Zusammensetzung bedruckt werden,
(iii) eine weitere Pulverschicht auf der in Schritt (ii) bedruckten Pulverschicht aufgebracht und in definierten Bereichen mit der oben beschriebenen flüssigen Zusammensetzung bedruckt wird,
(iv) gegebenenfalls weitere für die Herstellung des Formkörpers erforderliche Pulverschichten aufgebracht und jeweils in definierten Bereichen mit der oben beschriebenen flüssigen Zusammensetzung bedruckt werden,
(v) die aufgedruckte Zusammensetzung thermisch behandelt wird, so dass ein Polyester, ein Polyamid oder ein Polyesteramid ausgebildet und ein Formkörper erhalten wird, wobei in dem Formkörper das Pulver durch den Polyester, das Polyamid oder den Polyesteramid verbunden ist.

Hinsichtlich der Komponenten und der Eigenschaften der als Bindemittel für das Pulver fungierenden flüssigen Zusammensetzung kann auf die obigen Ausführungen verwiesen werden.

Wie oben bereits beschrieben, handelt es sich bei dem Binder-Jetting-Verfahren um ein additives Fertigungsverfahren. Durch das schichtweise Aufbringen von Pulverschichten und das lokale Applizieren des Bindemittels an den vorgegebenen Stellen in jeder der aufgebrachten Pulverschicht entsteht schließlich ein definierter Formkörper (d.h. ein Formkörper, der im Rahmen einer CAD-Datei erstellt wurde). Das Binder-Jetting-Verfahren wird auch als "*3D-Drucken*" bezeichnet (z.B. VDI Richtlinie VDI 3405, Dezember 2014). Da es sich um ein Pulverbett-basiertes Verfahren handelt, werden manchmal auch die Begriffe "*Pulver-3D-Druck*" oder "*Pulver-Binder-Jetting*" verwendet.

Geeignete Vorrichtungen und Drucker für ein Binder-Jetting-Verfahren sind dem Fachmann bekannt. Die flüssige Bindemittelzusammensetzung wird beispielsweise über einen Druckkopf (z.B. einen Piezo-Druckkopf) auf die Pulverschicht aufgedruckt. Nach dem Bedrucken einer Pulverschicht und vor dem Aufbringen einer neuen Pulverschicht wird die Bauplatte üblicherweise um die Dicke der neuen Pulverschicht abgesenkt.

Da die flüssige Zusammensetzung mindestens ein Monomer mit einer Funktionalität F≥3, also ein Monomer, das mindestens trifunktional ist, enthält, führt die thermische Behandlung ("Aushärtung") der Zusammensetzung zu einem verzweigten bzw. dreidimensional vernetzten Polyester, Polyamid oder Polyesteramid.

Der bzw. das durch die thermische Behandlung ausgebildete Polyester bzw. Polyamid oder Polyesteramid verbindet die Pulverpartikel miteinander und führt so zu einem formstabilen Formkörper.

Eine geeignete Temperatur, bei der die Monomere zu einem Polyester, Polyamid oder Polyesteramid umgesetzt werden können (z.B. über eine Polykondensation), ist dem Fachmann bekannt oder lässt sich gegebenenfalls durch Routineversuche bestimmen.

Beispielsweise erfolgt die thermische Behandlung der aufgedruckten Zusammensetzung bei einer Temperatur von mindestens 130°C, bevorzugter mindestens 150°C, beispielsweise im Bereich von 130°C bis 230°C, bevorzugter 160°C bis 210°C, besonders bevorzugt 170°C bis 200°C.

Beispielsweise erfolgt Schritt (v), nachdem alle für die Herstellung des Formkörpers erforderlichen Pulverschichten aufgebracht und jeweils mit der Binderzusammensetzung bedruckt wurden. Bevorzugt erfolgt Schritt (v) also nach Schritt (iii) oder, sofern die Herstellung des Formkörpers das Aufbringen weiterer Pulverschichten gemäß Schritt (iv) erfordert, nach Schritt (iv).

Mit dem erfindungsgemäßen Binder-Jetting-Verfahren können eine Vielzahl unterschiedlicher Pulver zu einem Formkörper verarbeitet werden. Beispielsweise ist das Pulver ein Pulver eines Metalls (Metallpulver), eines Kunststoffs oder eines anorganischen Materials wie z.B. eines keramischen Materials (Keramikpulver) oder Sand (z.B. Quarzpulver). Geeignete Partikelgrößen eines Pulvers für ein Pulverbett-basiertes Verfahren wie Binder-Jetting sind dem Fachmann bekannt. Beispielsweise kann ein Metallpulver einen Volumen-basierten d50-Wert im Bereich von 1-200 µm und ein keramisches Pulver einen Volumen-basierten d50-Wert im Bereich von 10 nm bis 200 µm aufweisen, wobei im Rahmen der vorliegenden Erfindung aber auch Pulver mit höheren oder niedrigeren d50-Werten verwendbar sind. Bei dem in dem erfindungsgemäßen Verfahren verwendeten pulverförmigen Material kann es sich auch um ein Granulat handeln.

Üblicherweise liegt das Pulver in dem in Schritt (v) erhaltenen Formkörper noch ungesintert vor. Dieser durch das noch ungesinterte Pulver und den Polyester oder das Polyamid oder Polyesteramid gebildete Formkörper wird nachfolgend auch als Grünkörper oder Grünling bezeichnet. Der mit dem erfindungsgemäßen Binder-Jetting-Verfahren erhaltene Grünkörper zeichnet sich durch eine hohe mechanische Festigkeit aus.

Der Grünkörper kann beispielsweise als Gießkern verwendet werden.

Nach der Aushärtung kann der Grünkörper von losem Pulver befreit werden.

Nach Schritt (v) können optional noch eine oder mehrere thermische Behandlungsschritte durchgeführt werden, um den Polyester, das Polyamid oder den Polyesteramid durch thermische Zersetzung aus dem Formkörper zu entfernen und ein Versintern des Pulvers zu bewirken (insbesondere wenn das Pulver ein Metallpulver oder ein keramisches Pulver ist). Geeignete Temperaturen für die thermische Zersetzung des Polyesters, Polyamids oder Polyesteramids und das Versintern des Pulvers sind bekannt oder kann der Fachmann auf Basis seines allgemeinen Fachwissens bestimmen. Die thermische Zersetzung des Polyesters, Polyamids oder Polyesteramids und/oder das Versintern des Pulvers im Grünkörper können beispielsweise in einer inerten, reduktiven oder oxidativen Atmosphäre erfolgen, angepasst an die Anforderungen, die das Pulver stellt (bei einem Metallpulver bevorzugt eine inerte oder reduktive Atmosphäre).

Die Erfindung betrifft weiterhin einen Formkörper, enthaltend
- ein Metallpulver und
- einen Polyester, ein Polyamid oder ein Polyesteramid, der bzw. das das Pulver verbindet, wobei der Polyester, das Polyamid oder das Polyesteramid durch eine Polymerisation eines oder mehrerer der oben beschriebenen zumindest trifunktionalen Monomere und optional eines oder mehrerer der oben beschriebenen bifunktionalen Monomere erhalten wird.

Hinsichtlich der bevorzugten Eigenschaften des Metallpulvers und des Polyesters, Polyamids oder Polyesteramids sowie der für deren Herstellung verwendeten Monomere kann auf die obigen Ausführungen verwiesen werden.

Da für die Polymerisation mindestens ein Monomer mit einer Funktionalität F≥3, also ein Monomer, das mindestens trifunktional ist, verwendet wird, ist der bzw. das im Formkörper vorliegende und das Pulver verbindende Polyester, Polyamid oder Polyesteramid dreidimensional vernetzt.

Das Pulver in dem Formkörper liegt bevorzugt noch ungesintert vor. Für diesen Fall kann der Formkörper auch als Grünkörper oder Grünling bezeichnet werden.

Durch die nachfolgenden Beispiele wird die Erfindung eingehender beschrieben.

### Beispiele

Es wurde ein flüssiges Bindemittel folgender Zusammensetzung hergestellt: 6,9 Gew% Glycerin, 16,1 Gew% Citronensäure, 2,0 Gew% Glycin, 75 Gew% Isopropanol. Glycerin und Citronensäure fungierten bei der während des Aushärtens stattfindenden Polyestersynthese als Monomere, die eine Funktionalität von mindestens 3 aufweisen (Glycerin: trifunktionales Monomer; Citronensäure: tetrafunktionales Monomer).

Als Pulver wurde ein Edelstahlpulver verwendet.

In einem Bauraum für Binder-Jetting wurde das Edelstahlpulver schichtweise auf eine Bauplatte aufgebracht und jede der aufgebrachten Pulverschichten wurde an den vordefinierten Stellen mit dem flüssigen Bindemittel bedruckt. Nach dem Aufbringen aller für die Herstellung des Formkörpers erforderlichen Pulverschichten wurde bei einer Temperatur von 180°C für 3 Stunden ausgehärtet.

Nach dem Aushärten wurde ein Grünkörper hoher mechanischer Festigkeit erhalten.

Die flüssige Bindemittelzusammensetzung ermöglicht hohe Standzeiten im Drucksystem ohne Verstopfung von Düsen des Druckkopfes sowie nach dem Bedrucken der Pulverschicht ein schnelles Trocknen sowie schnelles Aushärten bei möglichst geringer Temperatur und führt zu einem Grünteil hoher Festigkeit (d.h. zu hoher Grünfestigkeit). Außerdem zeigt der Binder nach seiner Aushärtung eine gute thermische Entfernbarkeit, so dass nach dem Sintern ein Formkörper erhalten werden kann, der keine störenden Rückstände des ausgehärteten Binders enthält.

## Patentansprüche

1. Verwendung einer flüssigen Zusammensetzung, enthaltend
- ein oder mehrere Monomere für die Herstellung eines Polyesters, Polyamids oder Polyesteramids, wobei zumindest ein Monomer mindestens trifunktional ist,
- ein Lösungsmittel,
als Bindemittel, das bei seiner Aushärtung zu einem Polyester, Polyamid oder Polyesteramid führt, bei der additiven Fertigung durch Binder-Jetting.

2. Verwendung nach Anspruch 1, wobei die Herstellung des Polyesters, Polyamids oder Polyesteramids bei der Aushärtung des Bindemittels durch Polykondensation erfolgt.

3. Verwendung nach Anspruch 1 oder 2, wobei das zumindest trifunktionale Monomer eine Verbindung ist, die mindestens drei funktionelle Gruppen A¹, A² und A³ aufweist, wobei die funktionellen Gruppen A¹, A² und A³ unabhängig voneinander eine Hydroxylgruppe, eine Aminogruppe, eine Carbonsäuregruppe oder ein Salz dieser Carbonsäuregruppe, eine Carbonsäureestergruppe oder eine Carbonsäurehalogenidgruppe sind und die funktionellen Gruppen A¹, A² und A³ gleich oder verschieden sein können; oder wobei zwei der funktionellen Gruppen A¹-A³ zusammen eine Carbonsäureanhydridgruppe oder eine cyclische Ethergruppe, insbesondere eine Epoxidgruppe, bilden und die dritte funktionelle Gruppe eine Hydroxylgruppe, eine Aminogruppe, eine Carbonsäuregruppe oder ein Salz dieser Carbonsäuregruppe, eine Carbonsäureestergruppe oder eine Carbonsäurehalogenidgruppe ist.

4. Verwendung nach einem der vorstehenden Ansprüche, wobei das zumindest trifunktionale Monomer ein Polyol, das mindestens 3 Hydroxylgruppen aufweist; eine aromatische Trihydroxyverbindung; ein Polyamin, das mindestens 3 Amingruppen aufweist; eine Hydroxycarbonsäure, wobei in der Summe die Anzahl der Hydroxygruppen und der Carbonsäuregruppen mindestens 3 beträgt; eine Aminosäure, wobei in der Summe die Anzahl der Aminogruppen und der Carbonsäuregruppen mindestens 3 beträgt; eine Hydroxy-Aminosäure; eine Polycarbonsäue, die mindestens 3 Carbonsäuregruppen enthält; oder ein Gemisch aus mindestens zwei der vorstehend genannten Verbindungen ist.

5. Verwendung nach einem der vorstehendenAnsprüche, wobei die flüssige Zusammensetzung als zumindest trifunktionale Monomere
(a) ein Polyol, das mindestens 3 Hydroxygruppen aufweist, und/oder ein Polyamin, das mindestens 3 Amingruppen aufweist; und
(b) mindestens eine der folgenden Verbindungen:
(b1) eine Hydroxycarbonsäure, wobei in der Summe die Anzahl der Hydroxygruppen und der Carbonsäuregruppen mindestens 3, bevorzugter 3-4 beträgt,
(b2) eine Aminosäure, wobei in der Summe die Anzahl der Aminogruppen und der Carbonsäuregruppen mindestens 3, bevorzugter 3-4 beträgt,
(b3) eine Hydroxy-Aminosäure,
(b4) eine Polycarbonsäure, die mindestens 3, bevorzugter 3-4 Carbonsäuregruppen enthält oder ein Anhydrid dieser Polycarbonsäure
enthält.

6. Verwendung nach einem der vorstehenden Ansprüche, wobei die flüssige Zusammensetzung ein oder mehrere bifunktionale Monomere enthält.

7. Verwendung nach Anspruch 6, wobei das bifunktionale Monomer eine der folgenden Verbindungen (i)-(iii) oder ein Gemisch aus mindestens zwei dieser Verbindungen ist:
(i) eine Verbindung, die eine funktionelle Gruppe A und eine funktionelle Gruppe B aufweist, wobei
- die funktionelle Gruppe A eine Aminogruppe oder eine Hydroxygruppe ist und
- die funktionelle Gruppe B eine Carbonsäuregruppe oder ein Salz dieser Carbonsäuregruppe, eine Carbonsäureestergruppe oder eine Carbonsäurehalogenidgruppe ist.
(ii) eine Verbindung, die eine funktionelle Gruppe A und eine funktionelle Gruppe A' aufweist, wobei die funktionellen Gruppen A und A' unabhängig voneinander eine Carbonsäuregruppe oder ein Salz dieser Carbonsäuregruppe, eine Carbonsäureestergruppe oder eine Carbonsäurehalogenidgruppe sind und die funktionellen Gruppen A und A' gleich oder verschieden sein können, oder wobei die funktionellen Gruppen A und A' zusammen eine Carbonsäureanhydridgruppe bilden;
(iii) eine Verbindung, die eine funktionelle Gruppe B und eine funktionelle Gruppe B' aufweist, wobei die funktionellen Gruppen B und B' unabhängig voneinander eine Hydroxylgruppe oder Aminogruppe sind und die funktionellen Gruppen B und B' gleich oder verschieden sein können, oder wobei die funktionellen Gruppen B und B' zusammen eine cyclische Ethergruppe bilden.

8. Verfahren zur Herstellung eines Formkörpers durch Binder-Jetting, wobei
(i) eine Pulverschicht auf einer Bauplattform oder einer zuvor aufgebrachten Pulverschicht aufgebracht wird,
(ii) definierte Bereiche der in Schritt (i) aufgebrachten Pulverschicht mit der flüssigen Zusammensetzung gemäß einem der Ansprüche 1-7 bedruckt werden,
(iii) eine weitere Pulverschicht auf der in Schritt (ii) bedruckten Pulverschicht aufgebracht und in definierten Bereichen mit der flüssigen Zusammensetzung gemäß einem der Ansprüche 1-7 bedruckt wird,
(iv) gegebenenfalls weitere für die Herstellung des Formkörpers erforderliche Pulverschichten aufgebracht und jeweils in definierten Bereichen mit der flüssigen Zusammensetzung gemäß einem der Ansprüche 1-7 bedruckt werden,
(v) die aufgedruckte Zusammensetzung thermisch behandelt wird, so dass ein Polyester, ein Polyamid oder ein Polyesteramid ausgebildet und ein Formkörper erhalten wird, wobei in dem Formkörper das Pulver durch den Polyester, das Polyamid oder den Polyesteramid verbunden ist.

9. Verfahren nach Anspruch 8, wobei das Pulver ein Metallpulver, ein keramisches Pulver, ein Quarzsandpulver oder ein Kunststoffpulver oder ein Gemisch aus mindestens zwei dieser Pulver ist.

10. Verfahren nach Anspruch 8 oder 9, wobei die thermische Behandlung in Schritt (iv) bei einer Temperatur von mindestens 130°C erfolgt.

11. Verfahren nach einem der Ansprüche 8-10, wobei nach Schritt (v) noch eine oder mehrere thermische Behandlungsschritte durchgeführt werden, um den Polyester, das Polyamid oder den Polyesteramid durch thermische Zersetzung aus dem Formkörper zu entfernen und das Pulver zu versintern.

12. Formkörper, enthaltend
- ein Metallpulver und
- einen Polyester, ein Polyamid oder ein Polyesteramid, der bzw. das das Pulver verbindet und der bzw. das durch eine Polymerisation eines oder mehrerer zumindest trifunktionaler Monomere und optional eines oder mehrerer bifunktionaler Monomere gemäß einem der Ansprüche 1-7 erhalten wird.

## Claims

1. Use of a liquid composition, comprising
- one or more monomers for the production of a polyester, polyamide or polyesteramide, where at least one monomer is at least trifunctional,
- a solvent,
as binder, which when hardened leads to a polyester, polyamide or polyesteramide, in additive manufacture by binder jetting.

2. Use according to Claim 1, wherein the production of the polyester, polyamide or polyesteramide in the hardening of the binder is achieved by polycondensation.

3. Use according to Claim 1 or 2, wherein the at least trifunctional monomer is a compound having at least three functional groups A¹, A² and A³, where the functional groups A¹, A² and A³ are mutually independently a hydroxy group, an amino group, a carboxylic acid group or salt of said carboxylic acid group, a carboxylic ester group or an acyl halide group and the functional groups A¹, A² and A³ can be identical or different; or where two of the functional groups A¹-A³ together form a carboxylic anhydride group or a cyclic ether group, in particular an epoxy group, and the third functional group is a hydroxy group, an amino group, a carboxylic acid group or salt of said carboxylic acid group, a carboxylic ester group or an acyl halide group.

4. Use according to any of the preceding claims, wherein the at least trifunctional monomer is a polyol having at least 3 hydroxy groups; an aromatic trihydroxy compound; a polyamine having at least 3 amine groups; a hydroxycarboxylic acid in which the sum total of the hydroxy groups and the carboxylic acid groups is at least 3; an amino acid in which the sum total of the amino groups and the carboxylic acid groups is at least 3; a hydroxyamino acid; a polycarboxylic acid having at least 3 carboxylic acid groups; or a mixture of at least two of the abovementioned compounds.

5. Use according to any of the preceding claims, wherein the liquid composition comprises, in the form of at least trifunctional monomers,
(a) a polyol having at least 3 hydroxy groups, and/or a polyamine having at least 3 amine groups; and
(b) at least one of the following compounds:
(b1) a hydroxycarboxylic acid in which the sum total of the hydroxy groups and the carboxylic acid groups is at least 3, more preferably 3-4,
(b2) an amino acid in which the sum total of the amino groups and the carboxylic acid groups is at least 3, more preferably 3-4,
(b3) a hydroxyamino acid,
(b4) a polycarboxylic acid containing at least 3, more preferably 3-4, carboxylic acid groups, or an anhydride of said polycarboxylic acid.

6. Use according to any of the preceding claims, wherein the liquid composition comprises one or more bifunctional monomers.

7. Use according to Claim 6, wherein the bifunctional monomer is one of the following compounds (i)-(iii) or a mixture of at least two of these compounds:
(i) a compound having a functional group A and a functional groups B, where
- the functional group A is an amino group or a hydroxy group and
- the functional group B is a carboxylic acid group or salt of said carboxylic acid group, a carboxylic ester group or an acyl halide group;
(ii) a compound having a functional group A and a functional group A', where the functional groups A and A' are mutually independently a carboxylic acid group or salt of said carboxylic acid group, a carboxylic ester group or an acyl halide group and the functional groups A and A' can be identical or different, or where the functional groups A and A' together form a carboxylic anhydride group;
(iii)a compound having a functional group B and a functional group B', where the functional groups B and B' are mutually independently a hydroxy group or amino group and the functional groups B and B' can be identical or different, or where the functional groups B and B' together form a cyclic ether group.

8. Process for the production of a shaped body by binder jetting, wherein
(i) a powder layer is applied on a construction platform or on a previously applied powder layer,
(ii) defined regions of the powder layer applied in step (i) are printed with the liquid composition according to any of Claims 1-7,
(iii)a further powder layer is applied on the powder layer printed in step (ii) and, in defined regions, is printed with the liquid composition according to any of Claims 1-7,
(iv) optionally further powder layers required for the production of the shaped body are applied and respectively printed in defined regions with the liquid composition according to any of Claims 1-7,
(v) the composition applied by printing is thermally treated, resulting in the formation of a polyester, a polyamide or a polyesteramide, a shaped body being obtained in which, within the shaped body, the powder has been bonded by the polyester, polyamide or polyesteramide.

9. Process according to Claim 8, wherein the powder is a metal powder, a ceramic powder, a quartz sand powder or a plastics powder or a mixture of at least two of these powders.

10. Process according to Claim 8 or 9, wherein the thermal treatment in step (iv) takes place at a temperature of at least 130°C.

11. Process according to any of Claims 8-10, wherein, after step (v), one or more further thermal treatment steps are carried out in order to remove the polyester, the polyamide or the polyesteramide from the shaped body by thermal decomposition and to sinter the powder.

12. Shaped body, comprising
- a metal powder and
- a polyester, a polyamide or a polyesteramide which bonds the powder and which is obtained by a polymerization of one or more at least trifunctional monomers and optionally of one or more bifunctional monomers according to any of Claims 1-7.

## Revendications

1. Utilisation d'une composition liquide, contenant
- un ou plusieurs monomères pour la fabrication d'un polyester, d'un polyamide ou d'un polyesteramide, au moins un monomère étant au moins trifonctionnel,
- un solvant,
en tant que liant qui, lors de son durcissement, conduit à un polyester, un polyamide ou un polyesteramide, lors de la fabrication additive par jet de liant.

2. Utilisation selon la revendication 1, la fabrication du polyester, du polyamide ou du polyesteramide ayant lieu lors du durcissement du liant par polycondensation.

3. Utilisation selon la revendication 1 ou 2, le monomère au moins trifonctionnel étant un composé qui comprend au moins trois groupes fonctionnels A¹, A² et A³, les groupes fonctionnels A¹, A² et A³ étant indépendamment les uns des autres un groupe hydroxyle, un groupe amino, un groupe acide carboxylique ou un sel de ce groupe acide carboxylique, un groupe ester d'acide carboxylique ou un groupe halogénure de carbonyle, et les groupes fonctionnels A¹, A² et A³ pouvant être identiques ou différents ; ou deux des groupes fonctionnels A¹-A³ formant un groupe anhydride carboxylique ou un groupe éther cyclique, en particulier un groupe époxyde, et le troisième groupe fonctionnel étant un groupe hydroxyle, un groupe amino, un groupe acide carboxylique ou un sel de ce groupe acide carboxylique, un groupe ester d'acide carboxylique ou un halogénure de carbonyle.

4. Utilisation selon l'une des revendications précédentes, le monomère au moins trifonctionnel étant un polyol qui comprend au moins trois groupes hydroxyle ; un composé trihydroxy aromatique ; une polyamine qui comprend au moins trois groupes amino ; un acide hydroxycarboxylique, le nombre des groupes hydroxy et des groupes acide carboxylique étant au total d'au moins 3 ; un acide aminé, le nombre des groupes amino et des groupes acide carboxylique étant au total d'au moins 3 ; un acide hydroxy-aminé, un acide polycarboxylique qui contient au moins trois groupes acide carboxylique ; ou un mélange d'au moins deux des composés mentionnés ci-dessus.

5. Utilisation selon l'une des revendications précédentes, la composition liquide contenant, en tant que monomères au moins trifonctionnels
(a) un polyol qui comprend au moins 3 groupes hydroxy et/ou une polyamine qui comprend au moins 3 groupes amino ; et
(b) au moins l'un des composés suivants :
(b1) un acide hydroxycarboxylique, le nombre des groupes hydroxy et des groupes acide carboxylique étant au total d'au moins 3, de préférence de 3-4,
(b2) un acide aminé, le nombre des groupes amino et des groupes acide carboxylique étant au total d'au moins 3, de préférence de 3-4,
(b3) un acide hydroxy-aminé,
(b4) un acide polycarboxylique qui contient au moins 3, de préférence 3-4 groupes acide carboxylique ou un anhydride de cet acide polycarboxylique.

6. Utilisation selon l'une des revendications précédentes, la composition liquide contenant un ou plusieurs monomères bifonctionnels.

7. Utilisation selon la revendication 6, le monomère bifonctionnel étant l'un des composés (i)-(iii) ci-après ou un mélange d'au moins deux de ces composés :
(i) un composé qui comprend un groupe fonctionnel A et un groupe fonctionnel B,
- le groupe fonctionnel A étant un groupe amino ou un groupe hydroxy et
- le groupe fonctionnel B étant un groupe acide carboxylique ou un sel de ce groupe acide carboxylique, un groupe ester d'acide carboxylique ou un groupe halogénure de carbonyle,
(ii) un composé qui comprend un groupe fonctionnel A et un groupe fonctionnel A', les groupes fonctionnels A et A' étant indépendamment des autres un groupe acide carboxylique ou un sel de ce groupe acide carboxylique, un groupe ester d'acide carboxylique ou un groupe halogénure de carbonyle, et les groupes fonctionnels A et A' pouvant être identiques ou différents, ou les groupes fonctionnels A et A' formant ensemble un groupe anhydride carboxylique ;
(iii) un composé qui comprend un groupe fonctionnel B et un groupe fonctionnel B', les groupes fonctionnels B et B' étant indépendamment l'un de l'autre un groupe hydroxyle ou un groupe amino, et les groupes fonctionnels B et B' pouvant être identiques ou différents, ou les groupes fonctionnels B et B' formant ensemble un groupe éther cyclique.

8. Procédé de fabrication d'un objet moulé par jet de liant, dans lequel
(i) on place une couche de poudre sur une plateforme de construction ou sur une couche de poudre préalablement appliquée,
(ii) on imprime des zones définies de la couche de poudre appliquée dans l'étape (i) avec la composition liquide selon l'une des revendications 1 à 7,
(iii) on applique une autre couche de poudre sur la couche de poudre imprimée dans l'étape (ii) et, dans des zones définies, on l'imprime avec la composition liquide selon l'une des revendications 1 à 7,
(iv) éventuellement, on applique d'autres couches de poudre nécessaires à la fabrication de l'objet moulé, et on imprime chacune dans des zones définies avec la composition liquide selon l'une des revendications 1 à 7,
(v) on soumet à un traitement thermique la composition imprimée, de façon à former un polyester, un polyamide ou un polyesteramide et obtenir un objet moulé, la poudre étant, dans l'objet moulé, liée grâce au polyester, au polyamide ou au polyesteramide.

9. Procédé selon la revendication 8, dans lequel la poudre est une poudre métallique, une poudre céramique, une poudre de sable de quartz ou une poudre plastique ou un mélange d'au moins deux de ces poudres.

10. Procédé selon la revendication 8 ou 9, dans lequel le traitement thermique de l'étape (iv) est réalisé à une température d'au moins 130 °C.

11. Procédé selon l'une des revendications 8 à 10, dans lequel, après l'étape (v), on effectue encore une ou plusieurs étapes de traitement thermique pour éliminer de l'objet moulé le polyester, le polyamide ou le polyesteramide par décomposition thermique, et pour fritter la poudre.

12. Objet moulé, contenant
- une poudre métallique et,
- un polyester, un polyamide ou un polyesteramide, qui lie la poudre et qui est obtenu par une polymérisation d'un ou plusieurs monomères au moins trifonctionnels et éventuellement d'un ou plusieurs monomères bifonctionnels selon l'une des revendications 1 à 7.
